# EUROPEAN PATENT APPLICATION

(11) **EP 3 094 009 A1**
(43) Date of publication of application: **16.11.2016**
(21) Application number: 14889719.2
(22) Date of filing: 16.04.2014
(51) Int. Cl.: H04B 7/00

(54) **MICROWAVE COMMUNICATION METHOD AND DEVICE**

(71) Applicant: Huawei Technologies Co. Ltd., Shenzhen, Guangdong 518129 (CN)
(72) Inventor: DU, Xianfeng, Shenzhen Guangdong 518129 (CN); YUAN, Lanjie, Shenzhen Guangdong 518129 (CN); HE, Jia, Shenzhen Guangdong 518129 (CN)
(74) Representative: Epping - Hermann - Fischer
(86) International application number: PCT/CN2014/075461
(87) International publication number: WO 2015/157930

(57) **Abstract**

The present invention discloses a microwave communication method and device to implement a physical layer-based microwave communication mechanism, so as to ensure effective data transmission. In the method, each frame of a transmitted or received microwave signal includes at least one frame header part and at least one load part, where the frame header part includes a preamble sequence, and the load part includes pilots and information payloads that are alternately distributed. In this way, the microwave signal carries synchronization information and load information, which implements physical layer-based microwave communication between devices, and ensures effective transmission of microwave data.

## Description

### TECHNICAL FIELD

The present invention relates to the field of communications technologies, and in particular, to a microwave communication method and device.

### BACKGROUND

At present, duplex modes used in microwave communications mainly include a frequency division duplex (Frequency Division Duplex, FDD) mode and a time division duplex (Time Division Duplex, TDD) mode.

In the FDD mode, symmetric frequency channels are used to separately transmit and receive a signal. A given frequency band guard interval exists between a transmit channel and a receive channel. In the TDD mode, a signal is transmitted and received in different timeslots of a same frequency channel, and a given guard time is used to separate the different timeslots from each other. No spectrum resource of symmetric frequency bands needs to be allocated, and a length ratio between transmit and receive time periods may be controlled and altered flexibly in each channel. When asymmetric data transmission is performed, limited radio spectrum resources can be fully utilized.

As a communication capacity is expanded and investment costs are reduced, microwave communications are developing rapidly. Existing microwave frequency bands can no longer meet a spectrum capacity requirement, and spectrum usage has been extended to unlicensed frequency bands. Because interference of an unlicensed frequency band appears randomly, and it is difficult to deploy a paired continuous spectrum.

A physical layer communication mechanism applicable to ever extending microwave frequency bands is still not yet available now. Therefore, how to implement physical layer-based microwave communication has become an industry-wide concern.

### SUMMARY

Embodiments of the present invention provide a microwave communication method and device to implement a physical layer-based microwave communication mechanism, so as to ensure effective data transmission.

According to a first aspect, a microwave communication method is provided, including:
generating a microwave signal carrying synchronization information and load information, where each frame of the microwave signal includes at least one frame header part and at least one load part, where the frame header part includes a preamble sequence, and the load part includes pilots and information payloads that are alternately distributed; and
transmitting the microwave signal.

With reference to the first aspect, in a first possible implementation manner of the first aspect, each frame of the microwave signal begins with the frame header part and ends with the load part, and each frame header part is immediately followed by at least one load part.

With reference to the first aspect or the first possible implementation manner, in a second possible implementation manner, the frame header part further includes an adaptive flow control sequence and/or an adaptive coding modulation sequence.

With reference to the second possible implementation manner of the first aspect, in a third possible implementation manner, if each frame of the microwave signal includes two or more load parts, the last load part is immediately preceded by one frame header part.

With reference to the third possible implementation manner of the first aspect, in a fourth possible implementation manner, the microwave signal is transmitted in a time division duplex TDD mode.

According to a second aspect, another microwave communication method is provided, including:
receiving a microwave signal, where each frame of the microwave signal includes at least one frame header part and at least one load part, where the frame header part includes a preamble sequence, and the load part includes pilots and information payloads that are alternately distributed; and
performing synchronization according to the frame header part, and obtaining, based on a synchronization result, load information carried in the load part.

With reference to the second aspect, in a first possible implementation manner of the second aspect, each frame of the microwave signal begins with the frame header part and ends with the load part, and each frame header part is immediately followed by at least one load part.

With reference to the second aspect or the first possible implementation manner, in a second possible implementation manner, the frame header part further includes an adaptive flow control sequence and/or an adaptive coding modulation sequence.

With reference to the second possible implementation manner of the second aspect, in a third possible implementation manner, if each frame of the microwave signal includes two or more load parts, the last load part is immediately preceded by one frame header part.

With reference to the third possible implementation manner of the second aspect, in a fourth possible implementation manner, the microwave signal is received in a time division duplex TDD mode.

According to a third aspect, a microwave communications device is provided, including:
a processing module, configured to generate a microwave signal carrying synchronization information and load information, where each frame of the microwave signal includes at least one frame header part and at least one load part, where the frame header part includes a preamble sequence, and the load part includes pilots and information payloads that are alternately distributed; and
a transmit module, configured to transmit the microwave signal.

With reference to the third aspect, in a first possible implementation manner, each frame of the microwave signal begins with the frame header part and ends with the load part, and each frame header part is immediately followed by at least one load part.

With reference to the third aspect or the first possible implementation manner, in a second possible implementation manner, the frame header part further includes an adaptive flow control sequence and/or an adaptive coding modulation sequence.

With reference to the second possible implementation manner of the third aspect, in a third possible implementation manner, if each frame of the microwave signal includes two or more load parts, the last load part is immediately preceded by one frame header part.

With reference to the third possible implementation manner of the third aspect, in a fourth possible implementation manner, the transmit module is specifically configured to:
transmit the microwave signal in a time division duplex TDD mode.

According to a fourth aspect, another microwave communications device is provided, including:
a receive module, configured to receive a microwave signal, where each frame of the microwave signal includes at least one frame header part and at least one load part, where the frame header part includes a preamble sequence, and the load part includes pilots and information payloads that are alternately distributed; and
a processing module, configured to perform synchronization according to the frame header part, and obtain, based on a synchronization result, load information carried in the load part.

With reference to the fourth aspect, in a first possible implementation manner, each frame of the microwave signal begins with the frame header part and ends with the load part, and each frame header part is immediately followed by at least one load part.

With reference to the fourth aspect or the first possible implementation manner, in a second possible implementation manner, the frame header part further includes an adaptive flow control sequence and/or an adaptive coding modulation sequence.

With reference to the second possible implementation manner of the fourth aspect, in a third possible implementation manner, if each frame of the microwave signal includes two or more load parts, the last load part is immediately preceded by one frame header part.

With reference to the third possible implementation manner of the fourth aspect, in a fourth possible implementation manner, the receive module is specifically configured to:
receive the microwave signal in a time division duplex TDD mode.

Based on the foregoing technical solutions, in the embodiments of the present invention, a frame structure of a microwave signal is defined. That is, each frame of the microwave signal includes at least one frame header part and at least one load part, where the frame header part includes a preamble sequence, and the load part includes pilots and information payloads that are alternately distributed. In this way, the microwave signal carries synchronization information and load information, which implements physical layer-based microwave communication between devices, and ensures effective transmission of microwave data.

### BRIEF DESCRIPTION OF DRAWINGS

FIG. 1 is a schematic diagram of a microwave signal transmission process according to an embodiment of the present invention;
FIG. 2a is a block diagram of transmit and receive timeslots in a TDD mode according to an embodiment of the present invention;
FIG. 2b is a schematic structural diagram of a frame header part according to an embodiment of the present invention;
FIG. 2c is a schematic structural diagram of a load part according to an embodiment of the present invention;
FIG. 3 is a schematic structural diagram of one frame of microwave signal according to an embodiment of the present invention;
FIG. 4 is a schematic diagram of a microwave signal receiving process according to an embodiment of the present invention;
FIG. 5a is a schematic diagram of a microwave signal frame structure according to an embodiment of the present invention;
FIG. 5b is a schematic diagram of another microwave signal frame structure according to an embodiment of the present invention;
FIG. 6 is a schematic structural diagram of a microwave communications device according to an embodiment of the present invention;
FIG. 7 is a schematic structural diagram of another microwave communications device according to an embodiment of the present invention;
FIG. 8 is a schematic structural diagram of another microwave communications device according to an embodiment of the present invention; and
FIG. 9 is a schematic structural diagram of another microwave communications device according to an embodiment of the present invention.

### DESCRIPTION OF EMBODIMENTS

To make the objectives, technical solutions, and advantages of the present invention clearer, the following further describes the present invention in detail with reference to the accompanying drawings. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

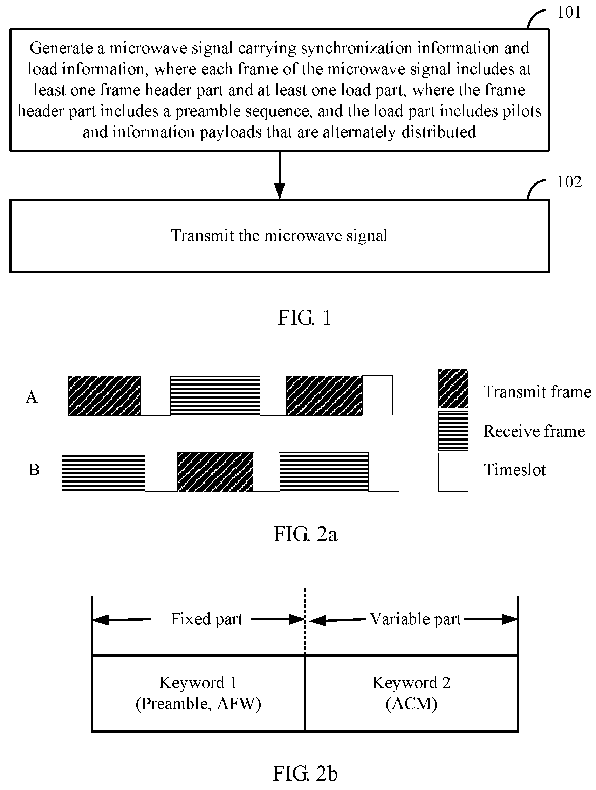

In a first embodiment of the present invention, as shown in FIG. 1, a specific process of transmitting a microwave signal at a transmit end is as follows:
Step 101: Generate a microwave signal carrying synchronization information and load information, where each frame of the microwave signal includes at least one frame header part and at least one load part, where the frame header part includes a preamble sequence, and the load part includes pilots and information payloads that are alternately distributed.
Step 102: Transmit the microwave signal.

In a frame structure provided in this embodiment of the present invention, the preamble sequence in the frame header part may be used for synchronization, and the pilots in the load part may be used for a phase-locked loop, phase noise immunity, or the like.

Preferably, each frame of the microwave signal begins with the frame header part and ends with the load part, and each frame header part is immediately followed by at least one load part. That is, consecutive frame header parts are not allowed.

Preferably, the frame header part further includes an adaptive flow control sequence and/or an adaptive coding modulation sequence.

In specific implementation, in a TDD mode, the frame header part includes at least a preamble sequence (Preamble) used for synchronization, and optionally, further includes an adaptive flow control sequence (Adaptive Flow Control, AFW).

Optionally, in the TDD mode, in addition to the preamble and the AFW, the frame header part further includes an adaptive coding modulation sequence (Adaptive Coding Modulation, ACM).

In specific implementation, in an FDD mode, the frame header part includes at least a preamble used for synchronization, and optionally, further includes an ACM.

In the frame header part, the AFW may be used for flow control and the ACM may be used for coding control.

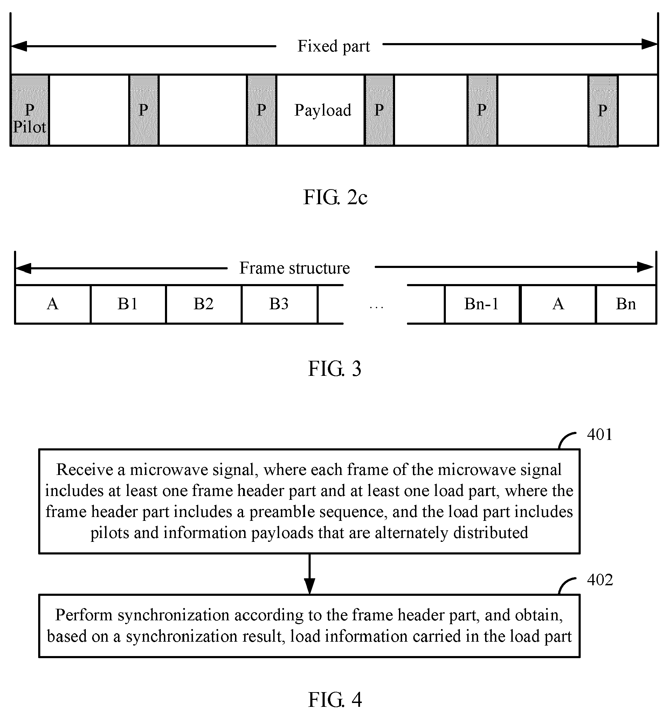

For example, in the TDD mode, when a device A communicates with a device B, as shown in FIG. 2a, a given guard period (Guard period, GP, also referred to as a timeslot) is reserved between a transmit frame and a receive frame. It is assumed that the frame header part includes a fixed part and a variable part, as shown in FIG. 2b. The fixed part includes a keyword 1, and the keyword 1 is preamble or a combination of preamble and AFW. The variable part is an optional part and includes a keyword 2, and the keyword 2 is ACM. As shown in FIG. 2c, the load part includes pilots (Pilot, P for short) and information payloads (Payload) that are alternately distributed.

Preferably, if each frame of the microwave signal includes two or more load parts, the last load part is immediately preceded by one frame header part.

For example, as shown in FIG. 3, it is assumed that one frame of microwave signal includes two frame header parts A, where a frame begins with an A, immediately followed by (n-1) Bs, that is, a B1, ..., a B (n-1). Then, the last A is immediately followed by one load part Bn. A quantity of consecutive Bs (that is, a value of n) that follow a starting A may be adjusted to achieve an objective of flow control. After being designed according to a requirement, a length of the load part may be fixed.

Corresponding to the first embodiment, in a second embodiment of the present invention, as shown in FIG. 4, a specific process of receiving a microwave signal at a receive end is as follows:
Step 401: Receive a microwave signal, where each frame of the microwave signal includes at least one frame header part and at least one load part, where the frame header part includes a preamble sequence, and the load part includes pilots and information payloads that are alternately distributed.
Step 402: Perform synchronization according to the frame header part, and obtain, based on a synchronization result, load information carried in the load part.

Preferably, each frame of the microwave signal begins with the frame header part and ends with the load part, and each frame header part is immediately followed by at least one load part. That is, consecutive frame header parts are not allowed.

Preferably, the frame header part further includes an adaptive flow control sequence and/or an adaptive coding modulation sequence.

In specific implementation, in a TDD mode, the frame header part includes at least a preamble sequence (preamble) used for synchronization, and optionally, further includes an adaptive flow control sequence (Adaptive Flow Control, AFW).

Optionally, in the TDD mode, in addition to the preamble and the AFW, the frame header part further includes an adaptive coding modulation sequence (Adaptive Coding Modulation, ACM).

In specific implementation, in an FDD mode, the frame header part includes at least a preamble used for synchronization, and optionally, further includes an ACM.

In the frame header part, the AFW may be used for flow control and the ACM may be used for coding control.

Preferably, if each frame of the microwave signal includes two or more load parts, the last load part is immediately preceded by one frame header part.

In the first and the second embodiments, the preamble sequence (preamble) carried in the frame header part may be used for frame synchronization, channel estimation, carrier frequency offset (Carrier Frequency Offset, CFO) estimation, or the like. In specific implementation, a preamble is implemented by using a strongly autocorrelated and weakly cross-correlated sequence, for example, implemented by using a pseudo noise (Pseudo Noise, PN) sequence, a Gold sequence, a ZC sequence, or the like. When a frequency offset is pre-estimated by using CFO and the preamble, a longer sequence indicates more accurate estimation. After a relatively large frequency offset is compensated by using CFO, a residual frequency offset may be further compensated by using a phase-locked loop. The phase-locked loop may be implemented by using the pilots in the load part. In addition, in a case of IQ imbalance, after a transmit end performs pre-correction, a receive end may perform correction again by referring to the preamble, so that reliability of correction is improved.

In the first and the second embodiments, the AFW carried in the frame header part may be used for adaptive flow control and assisting in frame synchronization, and the ACM carried in the frame header part may be used for adaptive coding modulation control and assisting in frame synchronization. In specific implementation, the AFW or the ACM is implemented by using a strongly autocorrelated and weakly cross-correlated sequence, for example, implemented by using a Walsh sequence, a Gold sequence, or the like.

In the first and the second embodiments, the pilot (Pilot) carried in the load part may be used for frequency offset estimation, phase noise estimation, in-phase/quadrature-phase (IQ) imbalance correction, or the like. In specific implementation, pilot data is a constant symbol, in a constellation diagram, whose power is greater than a set value. When the phase noise is loud, the pilot and the preamble may be used to accelerate and improve phase noise immunity performance.

In the first and the second embodiments, the information payload (Payload) carried in the load part may be used to carry physical-layer payload data, and used for timing recovery, IQ imbalance correction, or the like. In specific implementation, data carried in the information payload part is data that is obtained by multiplexing.

The microwave communication method provided in the first embodiment and the second embodiment may be applied to TDD communications and FDD communications, may be applied to licensed microwave frequency bands and unlicensed microwave frequency bands, and may be applied to a frequency-hopping communications scenario and a non-frequency-hopping communications scenario. In addition, the method may be used not only in high frequency band microwave communications but also in low frequency band communications, for example, Long Term Evolution (Long Term Evolution, LTE) communications and Wireless Fidelity (Wireless Fidelity, Wi-Fi).

The following uses two specific embodiments as examples to describe a frame structure of a microwave signal provided in the embodiments of the present invention.

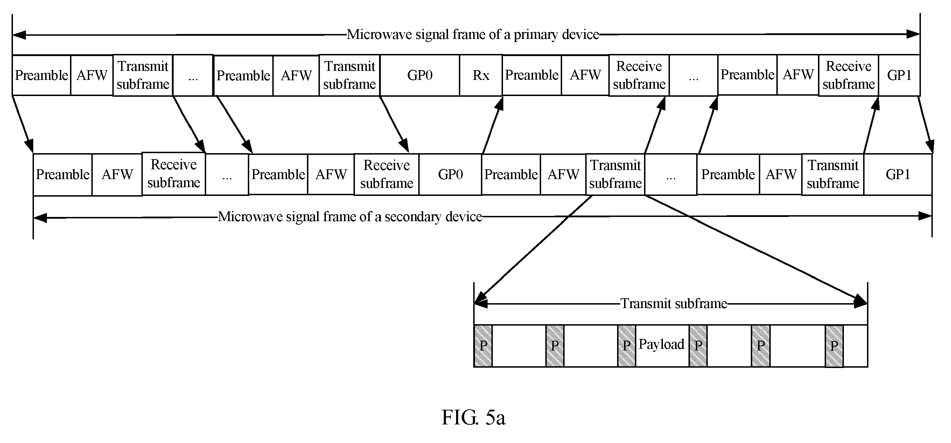

In a first specific embodiment, as shown in FIG. 5a, in a transmit frame, a frame header part is inserted in front of both the first transmit subframe (Tx Subframe) and the last transmit subframe. The frame header part includes a preamble and an AFW, and multiple consecutive transmit subframes (that is, load parts) exist between the two frame header parts. Similarly, in a receive frame, a frame header part is inserted in front of both the first receive subframe (Rx Subframe) and the last receive subframe. The frame header part includes a preamble and an AFW, and multiple consecutive receive subframes (that is, load parts) exist between the two frame header parts. A primary device (Primary) and a secondary device (Secondary) transmit and receive data based on the set frame structure.

The frame structure used in this specific embodiment carries relatively little redundant information and entails relatively high transmission efficiency. However, when a transmission environment change or another factor causes a received signal error or even communication interruption, such a frame structure does not allow timely response with, for example, information reflecting the transmission status and timeslot change information, which may result in a relatively long time to restore normal communication.

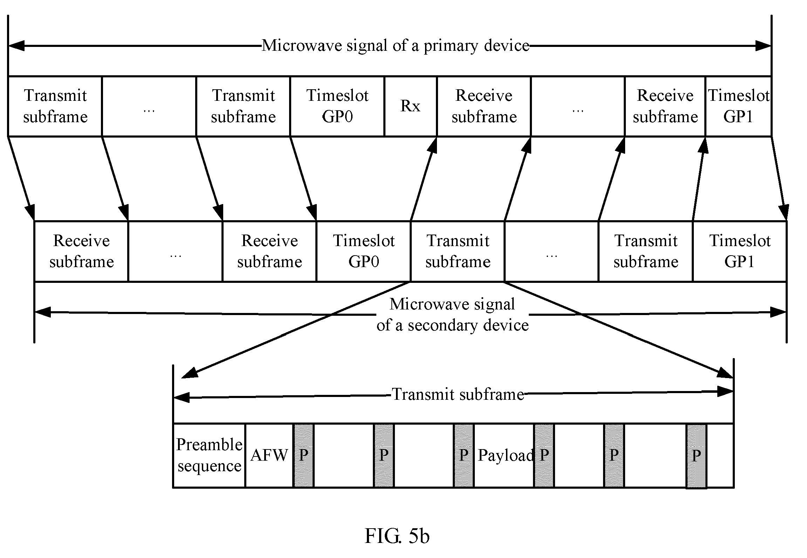

In a second specific embodiment, as shown in FIG. 5b, one frame of microwave signal according to this specific embodiment includes multiple subframes. All subframes have a same structure, and each subframe includes one frame header part and one load part. The frame header part includes a preamble and an AFW. When a primary device and a secondary device communicate based on the frame structure according to this specific embodiment, each transmit frame includes multiple consecutive transmit subframes (Tx Subframe), and each transmit subframe includes one frame header part and a load part following the frame header part. Similarly, each receive frame includes multiple consecutive receive subframes (Rx Subframe), and each receive subframe includes one frame header part and a load part following the frame header part.

With the frame structure used in this specific embodiment, in a process of receiving data and processing the received data, if transmission is interrupted, communication can be restored more quickly. The TDD mode is used as an example. Causes for transmission interruption are diversified. For example, symbol synchronization phase hopping caused by a transmission environment change further affects a starting part of a microwave signal frame. With the frame structure provided in this specific embodiment, when a communications link is out of synchronization, the frame header part of each subframe may be used for resynchronization, which ensures quick recovery of transmission, and increases reliability of transmission. However, in comparison with the frame structure provided in the first specific embodiment, the frame structure provided in this specific embodiment provides more redundancy and lower transmission efficiency.

Functions of specific parameters in the microwave signal frames provided in the first specific embodiment and the second specific embodiment are described as follows:
A. Primary device (Primary) side:
   transmit subframe, used for the primary device to transmit encapsulated upper-layer data and subframe control information;
   GP0 of the primary device (Primary), a guard period, which takes into account both a round-trip transmission delay of a signal between devices and a radio frequency switch latency from transmission to reception, so as to ensure that the primary device can be switched to a receive status before a transmit subframe of the secondary device (Secondary) arrives;
   receive Rx, used to make the primary device enter a receive status early, so that the primary device synchronizes receive subframes and receives data;
   receive subframe, used for synchronization and data reception of the primary device, whose format is the same as that of the transmit subframe of the primary device; and
   GP1, a guard period, which is a time interval for switching the primary device from a receive status to a transmit status.
B. Secondary device (Secondary) side:
   receive subframe, used for synchronization and data reception of the secondary device, whose format is the same as that of the transmit subframe of the primary device;
   GP0, a guard period, which takes into account both a round-trip transmission delay of a signal between devices and a radio frequency switch latency from transmission to reception, so as to ensure that the primary device can be switched to a receive status before a transmit subframe of the secondary device (Secondary) arrives;
   transmit subframe, used for the secondary device to transmit encapsulated upper-layer data and subframe control information, whose format is the same as the structure of the transmit subframe of the primary device; and
   GP1, a guard period, which is a time interval for switching the secondary device from a transmit status to a receive status.

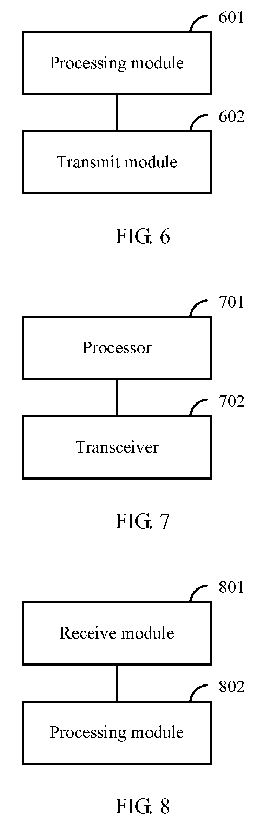

Based on the same principle, a third embodiment of the present invention provides a microwave communications device. For specific implementation of the device, reference may be made to the transmit end device in the foregoing method embodiments, and what is the same for both is not repeatedly described. As shown in FIG. 6, the device mainly includes:
a processing module 601, configured to generate a microwave signal carrying synchronization information and load information, where each frame of the microwave signal includes at least one frame header part and at least one load part, where the frame header part includes a preamble sequence, and the load part includes pilots and information payloads that are alternately distributed; and
a transmit module 602, configured to transmit the microwave signal.

Preferably, each frame of the microwave signal begins with the frame header part and ends with the load part, and each frame header part is immediately followed by at least one load part.

Preferably, the frame header part further includes an adaptive flow control sequence and/or an adaptive coding modulation sequence.

Preferably, if each frame of the microwave signal includes two or more load parts, the last load part is immediately preceded by one frame header part.

In specific implementation, in a TDD mode, the frame header part includes at least a preamble sequence (preamble) used for synchronization, and optionally, further includes an adaptive flow control sequence (Adaptive Flow Control, AFW).

Optionally, in the TDD mode, in addition to the preamble and the AFW, the frame header part further includes an adaptive coding modulation sequence (Adaptive Coding Modulation, ACM).

In specific implementation, in an FDD mode, the frame header part includes at least a preamble used for synchronization, and optionally, further includes an ACM.

In the frame header part, the AFW may be used for flow control and the ACM may be used for coding control.

Preferably, if each frame of the microwave signal includes two or more load parts, the last load part is immediately preceded by one frame header part.

Preferably, the transmit module transmits the microwave signal in a time division duplex TDD mode.

Based on the same principle, corresponding to the microwave communications device provided in the third embodiment, a fourth embodiment of the present invention provides a microwave communications device of another structure. For specific implementation of the device, reference may be made to the transmit end device in the foregoing method embodiments, and what is the same for both is not repeatedly described. As shown in FIG. 7, the device mainly includes:
a processor 701, configured to generate a microwave signal carrying synchronization information and load information, where each frame of the microwave signal includes at least one frame header part and at least one load part, where the frame header part includes a preamble sequence, and the load part includes pilots and information payloads that are alternately distributed; and
a transceiver 702, configured to transmit the microwave signal generated by the processor 701.

Preferably, each frame of the microwave signal begins with the frame header part and ends with the load part, and each frame header part is immediately followed by at least one load part.

Preferably, the frame header part further includes an adaptive flow control sequence and/or an adaptive coding modulation sequence.

Preferably, if each frame of the microwave signal includes two or more load parts, the last load part is immediately preceded by one frame header part.

In specific implementation, in a TDD mode, the frame header part includes at least a preamble sequence (preamble) used for synchronization, and optionally, further includes an adaptive flow control sequence (Adaptive Flow Control, AFW).

Optionally, in the TDD mode, in addition to the preamble and the AFW, the frame header part further includes an adaptive coding modulation sequence (Adaptive Coding Modulation, ACM).

In specific implementation, in an FDD mode, the frame header part includes at least a preamble used for synchronization, and optionally, further includes an ACM.

In the frame header part, the AFW may be used for flow control and the ACM may be used for coding control.

Preferably, if each frame of the microwave signal includes two or more load parts, the last load part is immediately preceded by one frame header part.

Preferably, the transceiver transmits the microwave signal in a time division duplex TDD mode.

Based on the same principle, a fifth embodiment of the present invention provides a microwave communications device. For specific implementation of the device, reference may be made to the receive end device in the foregoing method embodiments, and what is the same for both is not repeatedly described. As shown in FIG. 8, the device mainly includes:
a receive module 801, configured to receive a microwave signal, where each frame of the microwave signal includes at least one frame header part and at least one load part, where the frame header part includes a preamble sequence, and the load part includes pilots and information payloads that are alternately distributed; and
a processing module 802, configured to perform synchronization according to the frame header part, and obtain, based on a synchronization result, load information carried in the load part.

Preferably, each frame of the microwave signal begins with the frame header part and ends with the load part, and each frame header part is immediately followed by at least one load part.

Preferably, the frame header part further includes an adaptive flow control sequence and/or an adaptive coding modulation sequence.

Preferably, if each frame of the microwave signal includes two or more load parts, the last load part is immediately preceded by one frame header part.

In specific implementation, in a TDD mode, the frame header part includes at least a preamble sequence (preamble) used for synchronization, and optionally, further includes an adaptive flow control sequence (Adaptive Flow Control, AFW).

Optionally, in the TDD mode, in addition to the preamble and the AFW, the frame header part further includes an adaptive coding modulation sequence (Adaptive Coding Modulation, ACM).

In specific implementation, in an FDD mode, the frame header part includes at least a preamble used for synchronization, and optionally, further includes an ACM.

Preferably, the receive module is specifically configured to:
receive the microwave signal in a time division duplex TDD mode.

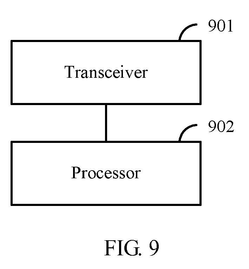

Based on the same principle, corresponding to the microwave communications device provided in the fifth embodiment, a sixth embodiment of the present invention provides a microwave communications device of another structure. For specific implementation of the device, reference may be made to the receive end device in the foregoing method embodiments, and what is the same for both is not repeatedly described. As shown in FIG. 9, the device mainly includes:
a transceiver 901, configured to receive a microwave signal, where each frame of the microwave signal includes at least one frame header part and at least one load part, where the frame header part includes a preamble sequence, and the load part includes pilots and information payloads that are alternately distributed; and
a processor 902, configured to perform synchronization according to the frame header part of the microwave signal received by the transceiver 901, and obtain, based on a synchronization result, load information carried in the load part.

Preferably, each frame of the microwave signal begins with the frame header part and ends with the load part, and each frame header part is immediately followed by at least one load part.

Preferably, the frame header part further includes an adaptive flow control sequence and/or an adaptive coding modulation sequence.

Preferably, if each frame of the microwave signal includes two or more load parts, the last load part is immediately preceded by one frame header part.

In specific implementation, in a TDD mode, the frame header part includes at least a preamble sequence (preamble) used for synchronization, and optionally, further includes an adaptive flow control sequence (Adaptive Flow Control, AFW).

Optionally, in the TDD mode, in addition to the preamble and the AFW, the frame header part further includes an adaptive coding modulation sequence (Adaptive Coding Modulation, ACM).

In specific implementation, in an FDD mode, the frame header part includes at least a preamble used for synchronization, and optionally, further includes an ACM.

Preferably, the transceiver receives the microwave signal in a time division duplex TDD mode.

Based on the foregoing technical solutions, in the embodiments of the present invention, a frame structure of a microwave signal is defined. That is, each frame of the microwave signal includes at least one frame header part and at least one load part. The frame header part includes a preamble sequence, and the load part includes pilots and information payloads that are alternately distributed. In this way, the microwave signal carries synchronization information and load information, which implements physical layer-based microwave communication between devices, and ensures effective transmission of microwave data.

A person skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Obviously, a person skilled in the art can make various modifications and variations to the present invention without departing from the spirit and scope of the present invention. The present invention is intended to cover these modifications and variations provided that they fall within the scope of protection defined by the following claims and their equivalent technologies.

## Claims

1. A microwave communication method, comprising:
generating a microwave signal carrying synchronization information and load information, wherein each frame of the microwave signal comprises at least one frame header part and at least one load part, wherein the frame header part comprises a preamble sequence, and the load part comprises pilots and information payloads that are alternately distributed; and
transmitting the microwave signal.

2. The method according to claim 1, wherein each frame of the microwave signal begins with the frame header part and ends with the load part, and each frame header part is immediately followed by at least one load part.

3. The method according to claim 1 or 2, wherein the frame header part further comprises an adaptive flow control sequence and/or an adaptive coding modulation sequence.

4. The method according to claim 3, wherein if each frame of the microwave signal comprises two or more load parts, the last load part is immediately preceded by one frame header part.

5. The method according to claim 4, wherein the microwave signal is transmitted in a time division duplex TDD mode.

6. A microwave communication method, comprising:
receiving a microwave signal, wherein each frame of the microwave signal comprises at least one frame header part and at least one load part, wherein the frame header part comprises a preamble sequence, and the load part comprises pilots and information payloads that are alternately distributed; and
performing synchronization according to the frame header part, and obtaining, based on a synchronization result, load information carried in the load part.

7. The method according to claim 6, wherein each frame of the microwave signal begins with the frame header part and ends with the load part, and each frame header part is immediately followed by at least one load part.

8. The method according to claim 6 or 7, wherein the frame header part further comprises an adaptive flow control sequence and/or an adaptive coding modulation sequence.

9. The method according to claim 8, wherein if each frame of the microwave signal comprises two or more load parts, the last load part is immediately preceded by one frame header part.

10. The method according to claim 9, wherein the microwave signal is received in a time division duplex TDD mode.

11. A microwave communications device, comprising:
a processing module, configured to generate a microwave signal carrying synchronization information and load information, wherein each frame of the microwave signal comprises at least one frame header part and at least one load part, wherein the frame header part comprises a preamble sequence, and the load part comprises pilots and information payloads that are alternately distributed; and
a transmit module, configured to transmit the microwave signal.

12. The device according to claim 11, wherein each frame of the microwave signal begins with the frame header part and ends with the load part, and each frame header part is immediately followed by at least one load part.

13. The device according to claim 11 or 12, wherein the frame header part further comprises an adaptive flow control sequence and/or an adaptive coding modulation sequence.

14. The device according to claim 13, wherein if each frame of the microwave signal comprises two or more load parts, the last load part is immediately preceded by one frame header part.

15. The device according to claim 14, wherein the transmit module is specifically configured to:
transmit the microwave signal in a time division duplex TDD mode.

16. A microwave communications device, comprising:
a receive module, configured to receive a microwave signal, wherein each frame of the microwave signal comprises at least one frame header part and at least one load part, wherein the frame header part comprises a preamble sequence, and the load part comprises pilots and information payloads that are alternately distributed; and
a processing module, configured to perform synchronization according to the frame header part, and obtain, based on a synchronization result, load information carried in the load part.

17. The device according to claim 16, wherein each frame of the microwave signal begins with the frame header part and ends with the load part, and each frame header part is immediately followed by at least one load part.

18. The device according to claim 16 or 17, wherein the frame header part further comprises an adaptive flow control sequence and/or an adaptive coding modulation sequence.

19. The device according to claim 18, wherein if each frame of the microwave signal comprises two or more load parts, the last load part is immediately preceded by one frame header part.

20. The device according to claim 19, wherein the receive module is specifically configured to:
receive the microwave signal in a time division duplex TDD mode.
